# FASCICULE DE BREVET EUROPEEN

(11) **EP 0 496 669 B1**
(45) Date de publication et mention de la délivrance du brevet: **30.08.1995**
(21) Numéro de dépôt: 92400159.7
(22) Date de dépôt: 22.01.1992
(51) Int. Cl.: H05B 3/86

(54) **Dispositif pour la pose d'un fil de résistance sous une forme onduleuse sur la pellicule intercalaire thermoplastique d'un vitrage feuilleté**
Vorrichtung zum Anbringen eines Widerstandsdrahtes in gewellter Form auf die thermoplastische Zwischenlage einer Verbundglasscheibe
Device for positioning a resistance wire in a corrugated shape on the intermediate thermoplastic layer of a laminated window

(30) Priorité: 24.01.1991 DE 4101984
(43) Date de publication de la demande: 29.07.1992
(73) Titulaire: SAINT-GOBAIN VITRAGE, 92400 Courbevoie (FR); VEGLA Vereinigte Glaswerke GmbH, D-52066 Aachen (DE)
(72) Inventeur: Roentgen, Paul, W-5106 Roetgen/Rott (DE); Brammertz, Herbert, W-5100 Aachen (DE); Schwarz, Walter, W-5100 Aachen (DE)
(74) Mandataire: Muller, René

(56) Documents cités:
- EP-A- 0 443 691
- DE-A- 2 652 371
- FR-A- 1 452 051
- FR-A- 2 140 075
- US-A- 3 392 759
- US-A- 3 795 472
- US-A- 4 244 774

## Description

La présente invention concerne un dispositif pour la pose et la fixation d'un fil de résistance sur une pellicule de support thermoplastique en vue de la fabrication d'un vitrage feuilleté chauffable électriquement, comportant un galet presseur chauffé roulant sur la pellicule de support et soudant le fil de résistance à cette pellicule, un support pour une bobine de fil et un dispositif guide-fil.

Dans le cas d'un dispositif connu de ce type qui sert à la pose du fil d'antenne sur la couche intercalaire en matière plastique d'un pare-brise en verre feuilleté, le fil est appliqué en ligne droite sur la pellicule de support (document DE-AS 20 43 706). Ce dispositif connu ne convient pas pour appliquer un fil de résistance électrique sous une forme onduleuse sur la pellicule de support.

Dans un dispositif connu pour l'application d'un fil de résistance sous une forme onduleuse, le fil est amené au-dessus de la pellicule de support par un dispositif de pose ayant la forme d'un patin de guidage animé d'un mouvement transversal périodique et est en même temps enfoncé dans la pellicule (document DE-AS 16 79 930). La forme onduleuse du fil est dans ce cas produite directement sur la surface de la pellicule et le fil doit, à l'instant de sa pose, être fixé suffisamment sous peine de se détacher aussitôt sous l'effet de la tension créée par le dispositif de pose. C'est pourquoi, la vitesse de pose du fil est soumise à des limites étroites.

Dans d'autres dispositifs connus pour la pose d'un fil de résistance sous une forme onduleuse, des couronnes dentées disposées obliquement l'une par rapport à l'autre roulent sur la pellicule, reçoivent le fil entre leurs dents qui se rapprochent l'une de l'autre et déforment le fil de manière onduleuse immédiatement avant sa pose sur la pellicule de support, puis l'enfoncent dans la pellicule de support soit elles-mêmes, soit à l'aide d'une roue de pression pourvue de doigts presseurs s'engageant entre les dents (document DE-AS-22 04 939). Ces dispositifs permettent certes une vitesse de pose élevée, mais sont très sensibles à l'entretien, car des particules de la pellicule de support thermoplastique adhèrent facilement aux dents et aux doigts presseurs s'engageant dans la surface de la pellicule de support et affectent défavorablement la capacité de fonctionnement du dispositif.

La demande de brevet antérieure EP-A-O 443 691 est comprise dans l'état de la technique selon l'article 54 paragraphe 3 de la convention sur le brevet européen. Cette demande est non opposable pour l'appréciation de l'activité inventive.

Cette demande antérieure décrit un dispositif pour la pose et la fixation d'un fil de résistance sur une pellicule de support thermoplastique en vue de la fabrication d'un vitrage feuilleté chauffable électriquement, comportant un galet presseur chauffant roulant sur la pellicule de support et enfonçant le fil de résistance dans cette pellicule, un support pour une bobine de fil et un dispositif guide fil, et dans lequel, entre le support pour la bobine de fil et le galet presseur chauffé est installée une paire de roues dentées qui s'engrènent l'une l'autre et qui déforment le fil, au moins une de ces roues dentées étant entraînée par le galet presseur roulant sur la pellicule de support.

Au départ de cet état de la technique, l'invention a pour but de procurer un dispositif pour la pose de fils de résistance électrique sous une forme onduleuse sur la surface de la couche intercalaire thermoplastique d'un vitrage feuilleté, qui permette, d'une part, une vitesse de pose élevée et qui soit, d'autre part, simple et robuste de construction et peu sujet aux pannes.

Suivant l'invention, ce but est réalisé notamment par le fait qu'entre le support pour la bobine de fil et le galet presseur chauffé est installé une paire de roues dentées qui s'engrènent l'une l'autre et qui déforment le fil, au moins une de ces roues dentées étant entraînée par le galet presseur roulant sur la pellicule, et, entre le galet presseur et la paire de roues dentées déformant le fil est intercalé un engrenage dont le rapport de réduction est choisi tel que la vitesse périphérique du galet presseur et ainsi la vitesse de pose du fil préfaçonné soient supérieures à la vitesse périphérique des roues dentées déformant le fil. De cette façon, le fil est maintenu sous une légère tension, sur la distance comprise entre la paire de roues dentées déformantes et le point de pose en dessous du galet presseur, ce qui permet d'éviter des glissements incontrôlés du fil.

Dans le cas du dispositif conforme à l'invention, la déformation du fil s'effectue dans un dispositif de déformation précédent le galet presseur et le galet presseur sert simplement à enfoncer le fil préfaçonné dans la surface de la pellicule. La largeur du galet presseur est supérieure à l'amplitude du fil préfaçonné, de sorte que, grâce à la surface de pression large qui, par ailleurs, peut être d'une configuration lisse, le galet presseur ne s'enfonce pas dans la pellicule et que cette pellicule n'est pas abîmée. L'entraînement des roues dentées déformant le fil par le galet presseur garantit que le fil soit posé sur la pellicule de support sous une forme constante d'une manière entièrement indépendante de la vitesse de pose.

En remplaçant les roues dentées déterminant le rapport de réduction de l'engrenage par d'autres roues dentées déterminant un autre rapport de réduction, on peut de cette manière simple modifier dans de larges limites l'amplitude du fil posé sur la pellicule de support. Le fil préfaçonné peut en effet être étiré plus ou moins fortement, de sorte que l'amplitude du fil préfaçonné est d'autant plus petite que la vitesse périphérique des roues dentées déformantes est petite par rapport à la vitesse périphérique du galet presseur.

Un exemple de réalisation préféré du dispositif conforme à l'invention sera décrit ci-après en détail, avec référence aux dessins annexés, dans lesquels :

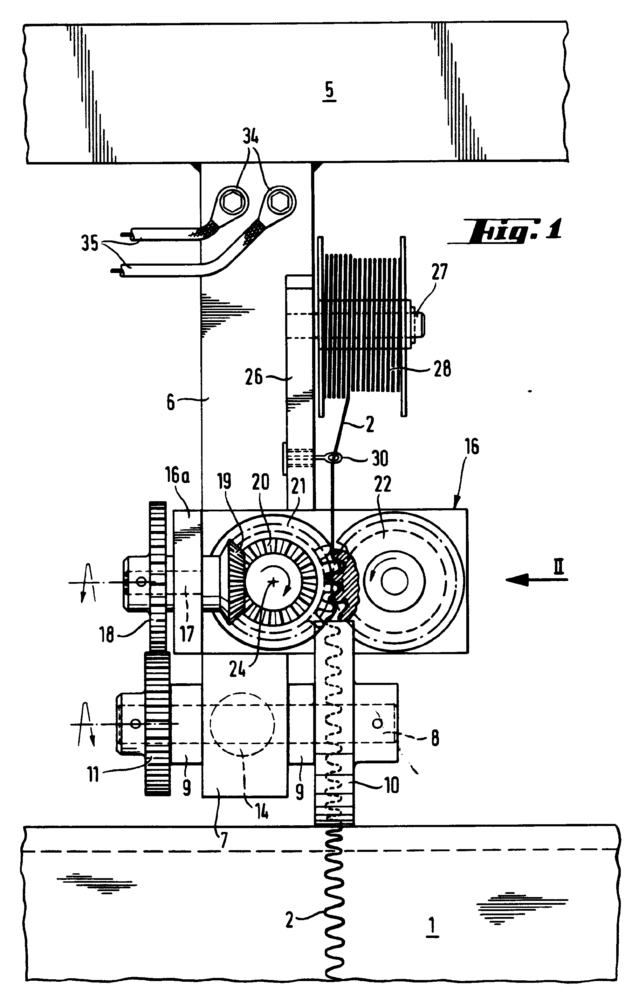

La fig. 1 est une vue en élévation de face d'un dispositif de pose de fil conforme à l'invention, et

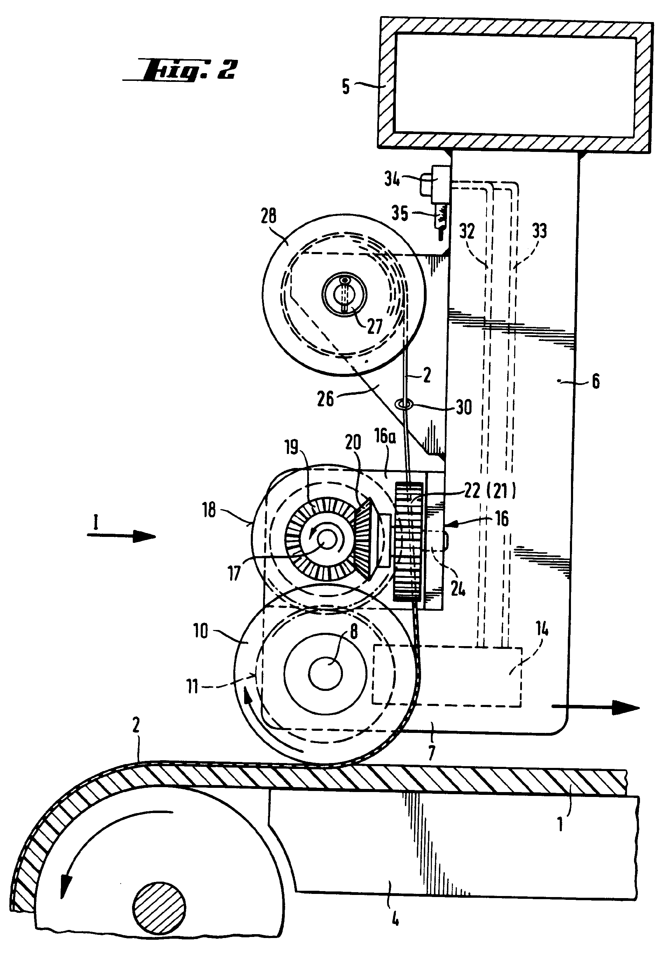

La fig. 2 est une vue en élévation de côté du dispositif de pose de fil.

La pellicule de support thermoplastique 1, sur laquelle le fil de résistance 2 est posé sous une forme onduleuse, est habituellement en butyral polyvinylique. Pour la pose du fil de résistance, le dispositif de pose est guidé sous une légère pression sur la pellicule de support 1 immobilisée sur une table de travail, ou la pellicule de support 1 défile sur un support mobile en dessous du dispositif de pose monté fixe, auquel cas il va de soi qu'il faut veiller à ce que le dispositif de pose exerce une pression correspondante sur la pellicule. Ces moyens qui assurent le positionnement de la pellicule et du dispositif de pose ainsi que le déplacement relatif nécessaire entre le dispositif de pose et la pellicule de support, sont connus en soi, de sorte que la description peut se limiter à la construction du dispositif de pose.

Sur la traverse 5, qui est installée au-dessus de la table d'appui 4 pour la pellicule de support 1, sont montés un ou plusieurs dispositifs de pose de fil. Chaque dispositif de pose de fil comprend un bras de support 6 qui est fixé à la traverse 5 et qui, à son extrémité inférieure, porte une pièce de tourillonnement 7 dans laquelle l'arbre 8 est monté à rotation. Sur cet arbre 8, d'un côté de la pièce de tourillonnement 7, après intercalation d'une bague d'espacement 9, est calé le galet presseur 10, tandis que de l'autre côté de la pièce de tourillonnement 7, également après intercalation d'une bague d'espacement 9, est calée une roue à denture droite 11 qui, en conséquence, tourne conjointement avec le galet presseur 10. Le galet presseur 10 présente une surface cylindrique lisse et sa largeur est supérieure à l'amplitude du fil onduleux 2. Dans la pièce de tourillonnement 7 est installée une résistance chauffante électrique 14 au moyen de laquelle le galet presseur 10 est chauffé dans une mesure telle qu'à l'endroit de contact du galet presseur 10 avec la pellicule de support 1, la matière thermoplastique de la pellicule soit chauffée au point que le fil 2 posé sous une forme onduleuse adhère à la surface ramollie de la pellicule.

La pièce de tourillonnement en forme d'équerre 16 est montée au-dessus du galet presseur 10 et de la roue à denture droite 11, sur le bras de support 6. L'aile saillante 16a forme le palier pour l'arbre 17 parallèle à l'arbre 8, sur lequel est fixée, au-dessus de la roue à denture droite 11, une roue à denture droite 18 qui engrène la roue 11. De l'autre côté de l'aile 16a, une roue dentée conique 19 est montée sur l'arbre 17. Cette roue dentée conique 19 est en prise avec une roue dentée conique 20 qui est reliée rigidement à une roue à denture droite 21. L'axe de rotation 24 pour la roue dentée conique 20 et pour la roue à denture droite 21 est perpendiculaire à l'axe de rotation 17 et est monté à rotation dans la pièce de tourillonnement 16. La roue à denture droite 21 engrène une roue à denture droite 22 disposée à côté d'elle et forme avec celle-ci la paire de roues dentées servant à la déformation du fil. Les segments de ces deux roues dentées 21, 22, qui sont en prise l'un avec l'autre se trouvent dans la zone située au-dessus du galet presseur 10, de sorte que le fil 2 déformé de manière onduleuse, après sa sortie de la zone d'engrènement des roues dentées, s'applique sur la surface cylindrique du galet presseur 10.

Les roues à denture droite 11, 18 sont dimensionnées d'une manière telle que la vitesse périphérique des roues dentées 21, 22 s'élève à environ 80% de la vitesse périphérique du galet presseur 10. En remplaçant les roues dentées 11 et 18 par des roues dentées de diamètres différents, on peut modifier le rapport de réduction de telle sorte que, par exemple, l'amplitude du fil 2 posé sous une forme onduleuse peut être modifiée.

Au-dessus de la pièce de tourillonnement 16, sur le bras de support 6, est montée une console 26 qui porte un axe de support 27 pour la bobine de fil 28. La console 26 porte, en outre, un oeillet guide-fil 30 pour le fil 2 dévidé de la bobine.

La résistance chauffante électrique 14 est alimentée en courant électrique par l'intermédiaire des conducteurs d'alimentation 32, 33 qui s'étendent à l'intérieur du bras de support 6. Les conducteurs d'alimentation 32, 33 aboutissent à des bornes de connexion 34 auxquelles sont connectés les câbles 35 provenant du dispositif d'alimentation électrique.

## Revendications

1. Dispositif pour la pose et la fixation d'un fil de résistance (2) sur une pellicule de support thermoplastique (1) en vue de la fabrication d'un vitrage feuilleté chauffable électriquement, comportant un galet presseur chauffé roulant sur la pellicule de support et enfonçant le fil de résistance dans cette pellicule, un support pour une bobine de fil et un dispositif guide-fil, entre le support (26-27) pour la bobine de fil (28) et le galet presseur chauffé (10) est installée une paire de roues dentées (21-22) qui s'engrènent l'une l'autre et qui déforment le fil (2), au moins une (21) de ces roues dentées étant entraînée par le galet presseur (10) roulant sur la pellicule de support (1), et entre le galet presseur (10) et la roue dentée (21) déformant le fil (2) est installé un engrenage (11, 18, 19, 20) dont le rapport de réduction est choisi tel que la vitesse périphérique des roues dentées (21, 22) déformant le fil (2) soit inférieure à la vitesse périphérique du galet presseur (10).

2. Dispositif suivant la revendication 1, caractérisé en ce que la vitesse périphérique des roues dentées (21,22) déformant le fil est d'environ 70 à 90% de la vitesse périphérique du galet presseur (10).

3. Dispositif suivant les revendications 1 à 2, caractérisé en ce que les roues dentées (21, 22) déformant le fil sont des roues à denture droite qui s'engrènent mutuellement, dont le plan de rotation s'étend perpendiculairement au plan de rotation du galet presseur (10) roulant sur la pellicule.

4. Dispositif suivant l'une des revendications 1 à 3, caractérisé en ce que l'engrenage est formé d'une roue à denture droite (11) montée sur l'arbre (8) du galet presseur (10), d'une roue à denture droite (18) engrenant la roue (11), d'une roue conique (19) reliée à la roue (18) et d'une roue conique (20) reliée à la roue dentée (21) déformant le fil (2).

5. Dispositif suivant l'une des revendications 1 à 4, caractérisé en ce qu'entre l'axe de retenue (27) pour la bobine de fil et la zone dans laquelle les roues dentées (21, 22) déformant le fil (2) s'engrènent mutuellement est prévu un oeillet guide-fil (30).

6. Dispositif suivant l'une des revendications 1 à 5, caractérisé en ce qu'un dispositif de chauffage électrique (14) est prévu à l'intérieur de la pièce de tourillonnement (7) portant le galet presseur (10).

7. Dispositif suivant l'une des revendications 1 à 6, caractérisé en ce que les roues dentées (11, 18) déterminant le rapport de réduction de l'engrenage peuvent être remplacées par des paires de roues dentées déterminant un autre rapport de réduction.

## Patentansprüche

1. Vorrichtung zum Ablegen und Fixieren eines Widerstandsdrahtes (2) auf einer thermoplastischen Trägerfolie (1) zur Herstellung einer elektrisch beheizbaren Verbundglasscheibe, mit einer auf der Trägerfolie abrollenden und den Widerstandsdraht in die Trägerfolie eindrückenden beheizten Druckrolle, einer Halterung für eine Drahtvorratsspule und einer Drahtführungseinrichtung, wobei zwischen der Halterung (26-27) für die Drahtvorratsspule (28) und der beheizten Druckrolle (10) ein Paar miteinander kämmender und den Draht (2) verformender Zahnräder (21-22) angeordnet ist, von denen wenigstens ein Zahnrad (21) von der auf der Trägerfolie (1) abrollenden Druckrolle (10) angetrieben ist, und wobei zwischen der Druckrolle (10) und dem den Draht (2) verformenden Zahnrad (21) ein Getriebe (11,18,19,20) angeordnet ist, dessen Übersetzungsverhältnis so gewählt ist, daß die Umfangsgeschwindigkeit der den Draht (2) verformenden Zahnräder (21,22) kleiner ist als die Umfangsgeschwindigkeit der Druckrolle (10).

2. Vorrichtung nach Anspruch 1, dadurch gekennzeichnet, daß die Umfangsgeschwindigkeit der den Draht verformenden Zahnräder (21,22) etwa 70 bis 90 % der Umfangsgeschwindigkeit der Druckrolle (10) beträgt.

3. Vorrichtung nach Anspruch 1 oder 2, dadurch gekennzeichnet, daß die den Draht verformenden Zahnräder (21,22) miteinander kämmende Stirnräder sind, deren Rotationsebene senkrecht zur Rotationsebene der auf der Folie ablaufenden Druckrolle (10) verläuft.

4. Vorrichtung nach einem der Ansprüche 1 bis 3, dadurch gekennzeichnet, daß das Getriebe aus einem auf der Welle (8) der Druckrolle (10) angeordneten Stirnrad (11), einem mit dem Stirnrad (11) kämmenden Stirnrad (18), einem mit dem Stirnrad (18) verbundenen Kegelrad (19) und einem mit dem den Draht (2) verformenden Zahnrad (21) verbundenen Kegelrad (20) besteht.

5. Vorrichtung nach einem der Ansprüche 1 bis 4, dadurch gekennzeichnet, daß zwischen dem Haltedorn (27) für die Drahtspule und der Zone, in der die den Draht (2) verformenden Zahnräder (21,22) miteinander in Eingriff stehen, eine Drahtführungsöse (30) vorgesehen ist.

6. Vorrichtung nach einem derAnsprüche 1 bis 5, dadurch gekennzeichnet, daß eine elektrische Heizvorrichtung(14) im Innern des die Druckrolle (10) tragenden Lagerstücks (7) angeordnet ist.

7. Vorrichtung nach einem der Ansprüche 1 bis 6, dadurch gekennzeichnet, daß die das Übersetzungsverhältnis bestimmenden Zahnräder (11,18) gegen Zahnradpaare mit einem anderen Übersetzungsverhältnis austauschbar sind.

## Claims

1. Device for placing and fixing a resistance wire (2) on a thermoplastic support sheet (1) for the purpose of producing an electrically heatable laminated pane, the device comprising a heated presser wheel rolling on the support sheet and pressing the resistance wire into this sheet, a support for a reel of wire and a wire-guide device, between the support (26-27) for the reel of wire (28) and the heated presser wheel (10) there is installed a pair of toothed wheels (21-22) which engage each other and which deform the wire (2), at least one (21) of these toothed wheels being driven by the presser wheel (10) rolling on the support sheet (1), and between the presser wheel (10) and the toothed wheel (21) deforming the wire (2) there is installed a gear (11, 18, 19, 20), the reduction ratio of which is chosen such that the peripheral speed of the toothed wheels (21, 22) deforming the wire (2) shall be lower than the peripheral speed of the presser wheel (10).

2. Device according to Claim 1, characterized in that the peripheral speed of the toothed wheels (21, 22) deforming the wire is approximately 70 to 90% of the peripheral speed of the presser wheel (10).

3. Device according to Claims 1 to 2, characterized in that the toothed wheels (21, 22) deforming the wire are wheels with straight toothing which engage mutually, the plane of rotation of which extends perpendicularly to the plane of rotation of the presser wheel (10) rolling on the sheet.

4. Device according to one of Claims 1 to 3, characterized in that the gear system is formed of a wheel with straight toothing (11) mounted on the shaft (8) of the presser wheel (10), of a wheel with straight toothing (18) engaging the wheel (11), of a conical wheel (19) connected to the wheel (18) and of a conical wheel (20) connected to the toothed wheel (21) deforming the wire (2).

5. Device according to one of Claims 1 to 4, characterized in that, between the mounting shaft (27) for the wire reel and the zone in which the toothed wheels (21, 22) deforming the wire (2) mutually engage, a wire-guiding eye (30) is provided.

6. Device according to one of Claims 1 to 5, characterized in that an electrical heating device (14) is provided inside the bearing piece (7) carrying the presser wheel (10).

7. Device according to one of Claims 1 to 6, characterized in that the toothed wheels (11, 18) determining the reduction ratio of the gear can be replaced by pairs of toothed wheels determining a' different reduction ratio.
